# EUROPÄISCHE PATENTANMELDUNG

(11) **EP 0 806 360 A1**
(43) Veröffentlichungstag der Anmeldung: **12.11.1997**
(21) Anmeldenummer: 97105988.6
(22) Anmeldetag: 11.04.1997
(51) Int. Cl.: B65B 41/18

(54) **Vorrichtung zum Aufbringen einer Deckfolie auf eine eingeformte Behälter aufweisende Bodenfolie**

(30) Priorität: 10.05.1996 DE 19618769
(71) Anmelder: HORN + NOACK PHARMATECHNIK GmbH, D-67505 Worms (DE)
(72) Erfinder: Albrecht, Günter, 76227 Karlsruhe (DE)
(74) Vertreter: Trappenberg, Hans

(57) **Zusammenfassung**

Eine Vorrichtung zum Aufbringen einer Deckfolie 1 auf eine eingeformte Behälter 3 aufweisende Bodenfolie 2 weist ein diskontinuierlich arbeitendes Formwerkzeug 4 mit ersten Vertiefungen zur Formung der Behälter 3 auf. Die Bodenfolie 2 wird abschnittsweise durch das Formwerkzeug 4 geführt. Zur Aufbringung der Deckfolie 1 auf die Bodenfolie 2 dient eine Abzugswalze 5, um welche die Bodenfolie 2 gelenkt wird. Die Abzugswalze 5 weist zweite Vertiefungen 6 auf, in welche die Behälter 3 der Bodenfolie 2 während der Umlenkung eingreifen. Der Abstand der zweiten Vertiefungen 6 in Umfangsrichtung der Abzugswalze 5 ist wenigstens teilweise größer als der Abstand der ersten Vertiefungen in Durchlaufrichtung der Bodenfolie 2 durch das Formwerkzeug 4. Eine Steuerung ist vorgesehen, mittels welcher die Länge der durch das Formwerkzeug 4 geführten Abschnitte der Bodenfolie 2 in Abhängigkeit der Lage der Deckfolie 1 relativ zur Bodenfolie 2 einstellbar ist.

## Beschreibung

Die Erfindung betrifft eine Vorrichtung zum Aufbringen einer Deckfolie auf eine eingeformte Behälter aufweisende Bodenfolie, mit einem diskontinuierlich arbeitenden Formwerkzeug mit ersten Vertiefungen zur Formung der Behälter, durch welches die Bodenfolie abschnittsweise geführt wird, und einer der Aufbringung der Deckfolie auf die Bodenfolie dienenden Abzugswalze, um welche die Bodenfolie umgelenkt wird, und welche zweite Vertiefungen aufweist, in welche die Behälter der Bodenfolie während der Umlenkung eingreifen.

Derartige Vorrichtungen werden regelmäßig zur Verpackung von Kleinteilen verwendet. So werden sie insbesondere in der pharmazeutischen Industrie zur Verpackung von Tabletten verwendet. Besonders bei Tablettenverpackungen ist die Deckfolie mit einem Druckbild versehen, welches Hinweise auf den Inhalt der Behälter gibt. Deshalb ist es in der Regel erforderlich, daß die Deckfolie mit der Bodenfolie positionsgenau verbunden wird.

Wenngleich das Druckbild auch mit hoher Präzision auf die Deckfolie aufgebracht wird und die Behälter mit hoher Präzision in die Bodenfolie eingeformt werden, läßt es sich auf Dauer nicht vermeiden, daß sich Verschiebungen zwischen dem Druckbild und den Behältern ergeben. Zur Korrektur des sich ergebenden Versatzes des Druckbildes zu den Behältern ist es bekannt, das Druckbild auf der Deckfolie so auszubilden, daß sich immer ein Versatz in eine bestimmte Richtung ergibt. Wird die Deckfolie gedehnt (sogenannte Reckung), erfolgt hierdurch eine Korrektur des Versatzes.

Aus der DE 32 01 315 A1 ist beispielsweise eine Vorrichtung zur Ausrichtung von Markierungen beim Formen und Füllen von Verpackungen bekannt, bei der die Deckfolie Markierungen aufweist, deren Abstand zueinander um einen geringen Betrag kleiner ist als der Abstand zwischen zwei benachbarten Behältern. Auf dem Transportweg der Deckfolie sind eine mit veränderbarer Geschwindigkeit umlaufende Vorschubrolle und eine mit konstanter Geschwindigkeit umlaufende Vorschubrolle hintereinander angeordnet.

Mittels der Markierungen kann die Position des Druckbildes relativ zu den Behältern festgestellt werden. Wird ein Versatz des Druckbildes zu den betreffenden Behältern festgestellt, wird die Deckfolie solange gedehnt, bis die Abweichung nicht mehr vorhanden ist. Dies geschieht in der Weise, daß die Drehzahl der mit veränderbarer Geschwindigkeit umlaufende Vorschubrolle etwas verringert wird. Da sich die andere Vorschubrolle mit konstanter Drehzahl weiterdreht, wird die Deckfolie im Bereich zwischen den beiden Vorschubrollen gedehnt.

Wenngleich durch die Dehnung der Deckfolie auch der Versatz des Druckbildes zu den Behältern zufriedenstellend korrigiert werden kann, so ist eine derartige Vorrichtung doch recht aufwendig herzustellen. Darüber hinaus birgt die Dehnung der Deckfolie immer die Gefahr einer Zerstörung der Deckfolie in sich. Dies insbesondere dann, wenn die Deckfolie um einen größeren Betrag gedehnt werden muß.

Es ist Aufgabe der Erfindung, eine eingangs genannte Vorrichtung zum Aufbringen einer Deckfolie auf eine eingeformte Behälter aufweisende Bodenfolie derart auszubilden, daß die Deckfolie nur noch einer geringen mechanischen Belastung ausgesetzt ist.

Die Lösung dieser Aufgabe ergibt sich aus den Merkmalen des kennzeichnenden Teils des Anspruchs 1. Vorteilhafte Weiterbildungen der Erfindung ergeben sich aus den Unteransprüchen.

Gemäß der Erfindung ist der Abstand der zweiten Vertiefungen in Umfangsrichtung der Abzugswalze wenigstens teilweise größer als der Abstand der ersten Vertiefungen in Durchlaufrichtung der Bodenfolie durch das Formwerkzeug. Des weiteren ist eine Steuerung vorgesehen, mittels welcher die Länge der durch das Formwerkzeug geführten Abschnitte der Bodenfolie in Abhängigkeit der Lage der Deckfolie relativ zur Bodenfolie einstellbar ist.

Durch den vergrößerten Abstand der zweiten Vertiefungen in Umfangsrichtung der Abzugswalze wird erreicht, daß die Bodenfolie beim Umlenken um die Abzugswalze gedehnt wird. Denn, da die Behälter beim Umlenken der Bodenfolie um die Abzugswalze in die zweiten Vertiefungen gezogen werden, wird erzwungen, daß sich der Abstand der Behälter, der dem Abstand der ersten Vertiefungen in Durchlaufrichtung der Bodenfolie durch das Formwerkzeug entspricht, sich dem größeren Abstand der zweiten Vertiefungen in Umfangsrichtung der Abzugswalze anpaßt.

Als besonders wirksam hat sich herausgestellt, wenn der Abstand von zwei zweiten Vertiefungen in Umfangsrichtung der Abzugswalze größer ist als der Abstand von zwei Behältern, von denen der eine am Ende eines im Formwerkzeug bearbeiteten Abschnitts und der andere am Anfang eines darauffolgend im Formwerkzeug bearbeiteten Abschnitts angeordnet ist. Der Abstand zwischen dem letzten Behälter eines Abschnitts und dem ersten Behälter eines Abschnitts kann dadurch eingestellt werden, daß die Folie nach dem Ausbilden der Behälter im Formwerkzeug um einen mehr oder weniger großen Betrag vorwärts bewegt wird.

Es hat sich herausgestellt, daß durch die Länge der durch den Weitertransport der Bodenfolie erzeugten Abschnitte die Länge der an der Abzugswalze anliegenden Bodenfolie einstellbar ist.

Wird festgestellt, daß zwischen dem Druckbild der Deckfolie und den Behältern ein Versatz besteht, wird die Länge der durch das Formwerkzeug transportierten Abschnitte soweit verändert, daß der Versatz aufgehoben ist.

Ist die Größe des Druckbilds auf der Deckfolie so bemessen, daß die zugehörige Soll-Abschnittslänge eine mittlere Dehnung der Bodenfolie auf der Abzugswalze bewirkt, läßt sich in vorteilhafter Weise ein Versatz des Druckbildes in beide Richtungen korrigieren.

Als besonders günstig hat es sich herausgestellt, wenn die zweiten Vertiefungen größer als die ersten Vertiefungen sind, so daß die Behälter mit Spiel in die zweiten Vertiefungen eingreifen. Hierdurch läßt sich zum einen eine Dehnung der Bodenfolie über einen größeren Bereich vornehmen und zum anderen wird die Gefahr einer Beschädigung der Behälter beim Eintauchen in die zweiten Vertiefungen verringert.

Bei einer weiteren vorteilhaften Ausführungsform der Erfindung sind Mittel vorgesehen, durch welche die Deckfolie gedehnt werden kann. Hierdurch besteht neben der Korrektur des Versatzes der Deckfolie zu den Behältern der Bodenfolie durch eine mehr oder weniger geringe Dehnung der Bodenfolie eine zusätzliche Korrekturmöglichkeit. Die zweite Korrekturmöglichkeit ist insbesondere dann von Vorteil, wenn die Auswirkungen einer Veränderung der Abschnittslänge eine nicht zu vernachlässigende Totzeit später auftreten. Da sich zwischen dem Formwerkzeug und der Abzugswalze regelmäßig eine Vielzahl von Abschnitten befindet, wirkt sich auf diese Abschnitte eine Veränderung der Abschnittslänge nicht mehr aus. Der bei diesen Abschnitten auftretende Versatz kann in vorteilhafter Weise durch die Dehnung der Deckfolie korrigiert werden.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:

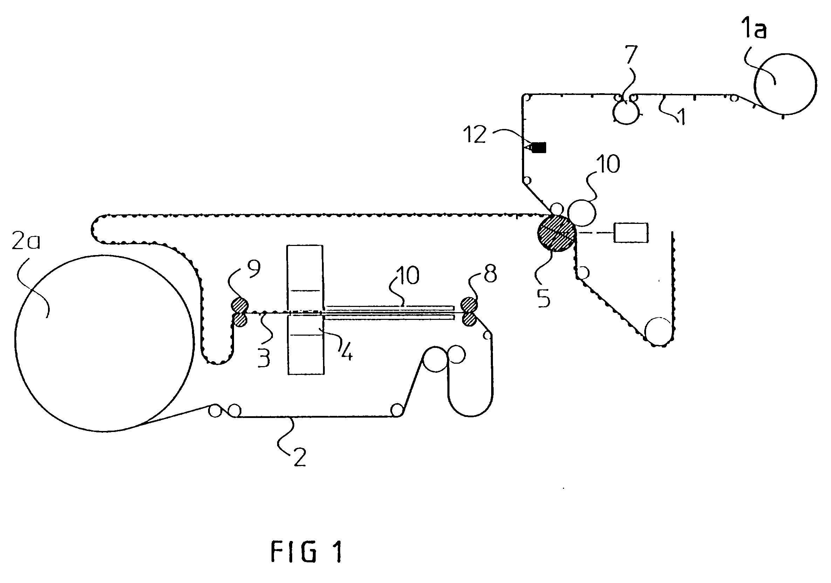

- Fig. 1: eine erfindungsgemäße Vorrrichtung in schematischer Darstellung und
- Fig. 2: einen vergrößerten Abschnitt der Vorrichtung nach Fig. 1.

Wie den Fig. entnommen werden kann, wird eine Bodenfolie 2 von einer Vorratsrolle 2a abgewickelt. Die Bodenfolie 2 wir über Umlenkrolle einem Folienvorschub 8, 9 zugeführt. Der Folienvorschub besteht aus einem ersten Folienvorschubwalzenstock 8 und einem zweiten Folienvorschubwalzenstock 9, welche in einem Abstand zueinander angeordnet sind. Die Folienvorschubwalzenstöcke 8, 9 werde durch einen Servomotor angetrieben. Hierdurch kann die Bodenfolie 2 abschnittsweise diskontinuierlich vorwärtsbewegt werden. Zwischen dem ersten Folienvorschubwalzenstock 8 und dem zweiten Folienvorschubwalzenstock 9 ist eine Heizung 10 und ein Formwerkzeug 4 angeordnet. Durch die Heizung 10 wird die Bodenfolie 2 soweit erwärmt, daß sie sich leicht in dem Formwerkzeug 4 verformen läßt.

Das Formwerkzeug 4 enthält nicht gezeigte erste Vertiefungen, durch welche in die Bodenfolie 2 Behälter 3, welche auch als Höfe bezeichnet werden, geformt. Die ersten Vertiefungen des Formwerkzeugs 4 sind in Durchlaufrichtung der Bodenfolie 2 in einem ersten Abstand a zueinander angeordnet. Hierdurch wird erreicht, daß auch die Behälter 3 in Längsrichtung der Bodenfolie 2 in einem Abstand a zueinander angeordnet sind.

Die Formung der Behälter 3 in die Bodenfolie 2 geschieht bei Stillstand der Bodenfolie 2 im Formwerkzeug 4. Nachdem die Behälter 3 in die Bodenfolie 2 geformt sind, wird der Servomotor der Folienvorschubwalzenstöcke 8,9 so angetrieben, daß sich die Bodenfolie 2 um einen Abschnitt vorwärtsbewegt, der geringfügig größer als die Breite des Formwerkzeugs 4 in Durchlaufrichtung der Bodenfolie 2 ist. Hierdurch entsteht zwischen dem jeweils letzten Behälter 3 eines Abschnitts und dem jeweils ersten Behälter 3 eines darauffolgenden Abschnitts in Längsrichtung der Bodenfolie 2 ein Abstand b, der größer als der Abstand a zwischen zwei Behältern 3 innerhalb eines Abschnitts ist. Durch Verändern der Größe des durch den Servomotor bewirkten Folienvorschubs läßt sich der Abstand b zwischen dem letzten Behälter 3 eines Abschnitts und dem ersten Behälter 3 eines darauffolgenden Abschnitts einstellen.

In Laufrichtung der Bodenfolie 2 ist hinter dem Formwerkzeug 4 eine Abzugswalze 5 angeordnet, welche zum Aufbringen einer Deckfolie 1 auf die Bodenfolie 2 dient. Da die Abzugswalze 5 kontinuierlich angetrieben wird, durchläuft die Bodenfolie 2 hinter dem Formwerkzeug 4 eine Schlaufe zur Pufferung der durch den diskontinuierlichen Betrieb des Formwerkzeugs 4 bedingten unterschiedlichen Folienlänge zwischen dem Formwerkzeug 4 und der Abzugswalze 5.

Die Bodenfolie 2 wird etwa in einem rechten Winkel um die Abzugswalze 5 umgelenkt. Die Abzugswalze 5 enthält zweite Vertiefungen 6, in welche die Behälter 3 während der Umlenkung der Bodenfolie 2 um die Abzugswalze 5 eintauchen. Die zweiten Vertiefungen 6 der Abzugswalze 5 sind etwas größer als die ersten Vertiefungen des Formwerkzeugs 4. Hierdurch besteht zwischen den Behältern 3 und den zweiten Vertiefungen 6 der Abzugswalze 5 ein Spiel.

Die zweiten Vertiefungen 6 sind derart in der Abzugswalze 5 ausgebildet, daß sie mit der Anordnung der ersten Vertiefungen des Formwerkzeugs 4 beziehungsweise der Anordnung der in der Bodenfolie 2 ausgebildeten Behälter 3 korrespondieren. Das heißt, daß die zweiten Vertiefungen 6 abschnittsweise in der Abzugswalze 5 ausgebildet sind. Der Abstand a' der zweiten Vertiefungen 6 in Umfangsrichtung der Abzugswalze 5 ist geringfügig größer als der Abstand a der Behälter 3. Der Abstand b' einer jeweils letzten zweiten Vertiefung 6 eines Abschnitts zu der jeweils ersten Vertiefung 6 eines darauffolgenden Abschnitts ist geringfügig größer als der Abstand b zwischen dem ersten und letzten Behälter 3 zweier aufeinanderfolgender Abschnitte, welcher sich beim kleinsten Vorschub der Bodenfolie 2 durch das Formwerkzeug 4 einstellt. Hierdurch wird erreicht, daß die Bodenfolie 2 bei der Umlenkung um die Abzugswalze 5 gedehnt wird.

Gegenüber der Abzugswalze 5 ist eine Siegelwalze 10 angeordnet, welche beweglich mit Druck an der Abzugswalze 5 anliegt. Die Bodenfolie 2 wird zwischen die Siegelwalze 10 und die Abzugswalze 5 geführt.

Neben der Bodenfolie 2 wird eine Deckfolie 1 zwischen die Abzugswalze 5 und die Siegelwalze 10 geführt. Die Deckfolie 1 ist vorbedruckt und wird einer zweiten Vorratsrolle 1a entnommen. Die Siegelwalze 10 ist erhitzt. Durch die Siegelwalze 10 und die Abzugswalze 5 wird die Deckfolie 1 derart mit Druck und Wärme auf die Bodenfolie 2 gepreßt, daß eine Versiegelung der Behälter 2 durch die Deckfolie 1 stattfindet.

Durch die Dehnung der Bodenfolie 2 bei der Umlenkung um die Abzugswalze 5 und die Einwirkung der Siegelwalze 10 auf die Bodenfolie 2 findet eine bleibende Streckung der Bodenfolie 2 statt. Der Abstand a'' der Behälter 3 in Laufrichtung der Bodenfolie 2 hinter der Abzugswalze 5 sowie der Abstand b'' des jeweils letzten Behälters 3 eines Abschnitts und des jeweils ersten Behälters 3 eines darauffolgenden Abschnitts ist somit größer als der jeweils entsprechende Abstand a, b in Laufrichtung der Bodenfolie 2 vor der Abzugswalze 5.

Die bleibende Dehnung der Bodenfolie 2 hängt ab von der Größe des Vorschubs der Bodenfolie 2 durch das Formwerkzeug 4. Somit kann durch eine Steuerung des Vorschubs der Bodenfolie 2 durch das Formwerkzeug 4 die Dehnung der Bodenfolie 2 durch die Abzugswalze 5 eingestellt werden.

Die Deckfolie 1 enthält neben dem Druckbild der Steuerung dienende Druckmarken 11. Die Position der Druckmarken wird mittels eines Druckmarkenlesekopfs 12 erfaßt. Befindet sich die Druckmarke 11 in ihrer Sollposition, stimmt das Druckbild mit den betreffenden Behältern 3 überein. Verläßt die Druckmarke 11 durch nichts zu vermeidende Fertigungstoleranzen bedingt ihre Sollposition, entsteht zwischen den Behältern 3 und dem betreffenden Druckbild ein Versatz.

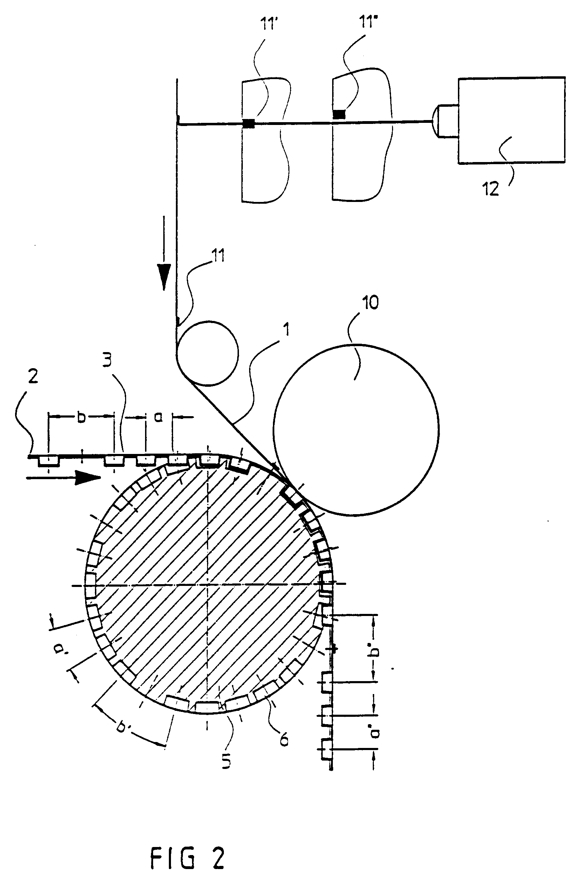

Stellt der Druckmarkenlesekopf 12 eine Abweichung der Position der Druckmarke 11 in Laufrichtung der Deckfolie 1 fest, wie dies bei der in Fig. 2 mit 11' bezeichneten Druckmarke der Fall ist, eilt das Druckbild den zugehörigen Behältern 3 voraus. Zur Korrektur muß daher die Bodenfolie 2 verkürzt werden. Dies geschieht dadurch, daß der Vorschub der Bodenfolie 2 durch das Formwerkzeug 4 etwas verkleinert wird. Da der Vorschub durch Servomotoren erzeugt wird, läßt sich eine Vorschubänderung sehr leicht vornehmen. Somit kann eine Korrektur der Position des Druckbilds sehr leicht vorgenommen werden.

Stellt der Druckmarkenlesekopf 12 eine Abweichung der Position der Druckmarke 11 entgegen der Laufrichtung der Deckfolie 1 fest, wie dies bei der in Fig. 2 mit 11'' bezeichneten Druckmarke der Fall ist, läuft das Druckbild den zugehörigen Behältern 3 hinterher. Zur Korrektur muß daher die Bodenfolie 2 verlängert werden. Dies geschieht dadurch, daß der Vorschub der Bodenfolie 2 durch das Formwerkzeug 4 etwas vergrößert wird. Die Vergrößerung beziehungsweise Verringerung des Vorschubs geschieht durch eine entsprechende Steuerung der Servomotoren der Folienvorschubwalzenstöcke 8, 9.

Da sich zwischen dem Formwerkzeug 4 und der Abzugswalze 5 bereits mit einem nicht veränderten Vorschub hergestellte Behälterabschnitte befindet, wirkt sich eine Korrektur des Vorschubs auf diese Abschnitte nicht aus. Um die Position des Druckbilds im Hinblick auf diese Behälterabschnitte zu korrigieren, ist eine Deckfolienbremse 7 vorgesehen, durch die der Transport der Deckfolie 1 gestoppt werden kann. Da die Deckfolie 1 durch die Siegelwalze 10 auf die Abzugswalze 5 gedruckt wird und sich die Abzugswalze 5 kontinuierlich dreht, findet eine Dehnung der Deckfolie 1 statt, durch die die Position des Druckbildes im Hinblick auf die Behälter 3 der bereits sich zwischen dem Formwerkzeug 4 und der Abzugswalze 5 befindlichen Abschnitte erfolgt.

## Patentansprüche

1. Vorrichtung zum Aufbringen einer Deckfolie (1) auf eine eingeformte Behälter (3) aufweisende Bodenfolie (2), mit einem diskontinuierlich arbeitenden Formwerkzeug (4) mit ersten Vertiefungen zur Formung der Behälter (3), durch welches die Bodenfolie (2) abschnittsweise geführt wird, und einer der Aufbringung der Deckfolie (1) auf die Bodenfolie (2) dienenden Abzugswalze (5), um welche die Bodenfolie (2) gelenkt wird, und welche zweite Vertiefungen (6) aufweist, in welche die Behälter (3) der Bodenfolie (2) während der Umlenkung eingreifen,
dadurch gekennzeichnet,
daß der Abstand der zweiten Vertiefungen (6) in Umfangsrichtung der Abzugswalze (5) wenigstens teilweise größer ist als der Abstand der ersten Vertiefungen in Durchlaufrichtung der Bodenfolie (2) durch das Formwerkzeug (4) und eine Steuerung vorgesehen ist, mittels welcher die Länge der durch das Formwerkzeug (4) geführten Abschnitte der Bodenfolie (2) in Abhängigkeit der Lage der Deckfolie (1) relativ zur Bodenfolie (2) einstellbar ist.

2. Vorrichtung nach Anspruch 1,
dadurch gekennzeichnet,
daß die zweiten Vertiefungen (6) größer als die ersten Vertiefungen sind, so daß die Behälter (3) mit Spiel in die zweiten Vertiefungen (6) eingreifen.

3. Vorrichtung nach Anspruch 1 oder 2,
dadurch gekennzeichnet,
daß Mittel (7) zum Dehnen der Deckfolie (1) vorgesehen sind.
